# EUROPÄISCHE PATENTSCHRIFT

(11) **EP 1 188 779 B1**
(45) Veröffentlichungstag und Bekanntmachung des Hinweises auf die Patenterteilung: **09.06.2004**
(21) Anmeldenummer: 01116384.7
(22) Anmeldetag: 06.07.2001
(51) Int. Cl.: C08G 18/28, C08G 18/32, C08G 18/22, C07C 273/18, C09D 5/04

(54) **Verfahren zur Herstellung einer lagerstabilen, rheologisch wirksamen Harnstoffurethan-Lösung mit breiter Verträglichkeit**
Process for preparing a storage-stable rheologically active urea-urethane solution with broad compatibility
Procédé de préparation d'une solution urée-uréthane stable au stockage et rhéologiquement active à large compatibilité

(30) Priorität: 16.08.2000 DE 10039837
(43) Veröffentlichungstag der Anmeldung: 20.03.2002
(73) Patentinhaber: Byk-Chemie GmbH, 46483 Wesel (DE)
(72) Erfinder: Haubennestel, Karlheinz, 46487 Wesel (DE); Orth, Ulrich, Dr., 46485 Wesel (DE); Woocker, Axel, 46459 Rees (DE); Holtkamp, Heribert, 46483 Wesel (DE); Buchmann, Christoph, 46485 Wesel (DE)
(74) Vertreter: Leifert, Elmar, Dr.

(56) Entgegenhaltungen:
- EP-A- 1 048 681
- DE-B- 2 822 908
- US-A- 4 870 151

## Beschreibung

Die Erfindung betrifft ein Verfahren zur Herstellung einer als Thixotropie-Mittel wirksamen, Harnstoffurethane enthaltenden Lösung, bei dem Monohydroxyverbindungen mit einem Überschuß von Toluylendiisocyanat umgesetzt werden, der nicht umgesetzte Teil des Toluylendiisocyanats aus dem Reaktionsgemisch entfernt wird und die erhaltenen Monoisocyanat-Addukte mit Diaminen in einem aprotischen Lösemittel in Gegenwart eines Lithiumsalzes zu Hamstoffurethanen weiter umgesetzt werden. Die Erfindung betrifft des Weiteren die Verwendung der Lösung zur Thixotropierung von Beschichtungsmitteln.

Um die Rheologie von flüssigen Beschichtungssystemen zu steuern, werden vorwiegend organisch modifizierte Bentonite, Kieselsäuren, hydriertes Rizinusöl und Polyamidwachse eingesetzt. Nachteilig bei diesen Stoffen ist, daß sie meist trockene Feststoffe darstellen, die mittels Lösungsmitteln und Scherkräften zu einem Halbfabrikat aufgeschlossen bzw. durch gezielte Temperatursteuerung in das flüssige Beschichtungssystem eingebracht werden müssen. Werden diese Temperaturen nicht eingehalten, treten im fertigen Beschichtungssystem Kristallite auf, die zu Fehlern in der Beschichtung führen können.

Der generelle Nachteil dieser heute eingesetzten rheologischen Hilfsstoffe ist, daß sie zu Trübungen und Schleierbildungen (Haze) in klaren, transparenten Beschichtungen führen. Außerdem ist der Umgang mit trockenen, pulverförmigen Produkten, die Stäube bei der Verarbeitung verursachen, nicht gewünscht.

Andere Lösungen zur Rheologiesteuerung wurden dargestellt in der europäischen Patentanmeldung EP-A-0 198 519. Hier wird ein Isocyanat mit einem Amin in Gegenwart von Lackharz-Lösungen zu einem Harnstoff umgesetzt, der in feinstdisperser Form nadelförmige Kristalle bildet. Diese so modifizierten Lackbindemittel werden als rheologiesteuernde und ablaufverhindernde Bindemittel angeboten, als sogenannte "*sag control agents*". Der Nachteil dieser Produkte liegt darin begründet, daß sie immer an die Bindemittel gebunden sind, in denen sie hergestellt wurden und keine nachträgliche universelle Korrektur von fertigen Beschichtungsmitteln zulassen.

In dem europäischen Patent EP-B-0 006 252 wird ein Verfahren zur Herstellung eines Thixotropie-Mittels beschrieben, das einige der o. g. Nachteile ausräumt, indem es Harnstoffurethane beschreibt, die in aprotischen Lösungsmitteln in Gegenwart von Lithiumsalzen durch Umsetzung von Isocyanataddukten mit Polyaminen hergestellt werden. Die so hergestellten Produkte weisen jedoch zwei signifikante Nachteile auf. Zum einen sind diese Thixotropie-Mittel durch eine durch das Herstellungsverfahren bedingte undefinierte Struktur gekennzeichnet. Es werden zwar Monoisocyanat-Addukte beschrieben, tatsächlich liegen hier aber gar keine Monoaddukte vor, wie dies aus dem Beispiel klar ersichtlich wird, sondern Mischungen verschiedener Addukte. Bei dem beschriebenen Verfahren wird ein Mol eines Diisocyanats zunächst mit einem Mol eines Monoalkohols umgesetzt. Dabei entstehen teilweise die gewünschten NCO-funktionellen Monoaddukte, aber auch nicht NCO-funktionelle Diadukte, die dann bei der weiteren Umsetzung mit Polyaminen in Gegenwart von Lithiumchlorid zu unkontrollierter Kettenverlängerung des Harnstoffurethans und zu polymeren Harnstoffen führen. Diese Produkte neigen dann zu Ausfallerscheinungen und sind nur unter größten Schwierigkeiten in Lösung zu halten. Ein weiterer Nachteil der durch dieses Verfahren hergestellten Thixotropie-Mittel ist darin zu erkennen, daß immer nur Monoisocyanat-Addukte gleicher Struktur mit dem Diamin umgesetzt werden. Dies führt zum einen zu einer begrenzten Verträglichkeit in den eingesetzten Beschichtungssystemen, die sich in Gelkörpern oder starken Trübungen äußert, und zum anderen zu einer schlechteren rheologischen Wirksamkeit.

Der vorliegenden Erfindung liegt daher die Aufgabe zugrunde, Thixotropie-Mittel zu finden, welche zum einen eine definierte Struktur aufweisen und daher eine größere Lagerstabilität der so hergestellten Lösung über mehrere Monate zulassen und zum anderen durch eine breitere Verträglichkeit in Bindemitteln gekennzeichnet sind und damit eine sichere Anwendung der Produkte ermöglichen. Von besonderem Interesse ist dies in modernen Lacksystemen, die relativ polar eingestellt sind, wie z.B. Wasserlacken oder Highsolid-Systemen.

Überraschenderweise wurde gefunden, daß diese Aufgabe dadurch gelöst werden kann, daß bei einem Verfahren der eingangs genannten Art mindestens zwei strukturell verschiedene Monoisocyanat-Addukte, die sich durch ihre Alkoholkomponente unterschieden, mit den Diaminen zu Hamstoffaddukten umgesetzt werden.

Die vorliegende Erfindung betrifft demnach ein Verfahren, bei dem mindesten zwei strukturell verschiedene Monohydroxyverbindungen der allgemeinen Struktur R-OH, in der R für einen n-Alkyl-Rest oder einen i-Alkyl-Rest mit 4 bis 22 C-Atomen, einen Alkenylrest mit 3 bis 18 C-Atomen, einen Cycloalkylrest, einen Aralkylrest, oder für einen Rest der Formel CₘH₂ₘ₊₁(O-CₙH₂ₙ)ₓ-, CₘH₂ₘ₊₁(OOC-CᵥH₂ᵥ)ₓ- oder Z-C₆H₄(O-CₙH₂ₙ)ₓ-, in denen m=1-22 ist, n=2-4 ist, x=1-15 ist, v=4 oder 5 ist und Z einem Alkylrest mit 1 bis 12 C-Atomen entspricht, steht, mit einem 1,5 bis 5-fachen Überschuß von Toluylendiisocyanat zu Monoisocyanataddukten der allgemeinen Struktur (I) 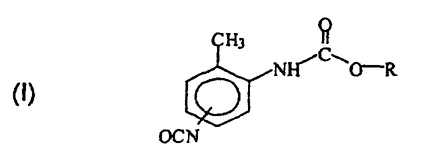 umgesetzt werden, und der nicht umgesetzte Teil des Toluylendiisocyanats aus dem Reaktionsgemisch entfernt wird die auf diese Weise erhaltenen Monoisocyanat-Addukte mit Diaminen der Formel H₂N-R'-NH₂, in der R' einem Rest
-CₒH₂ₒ- mit o=2-12, -(CₚH₂ₚ-O-CₚH₂ₚ)_{q}- mit p=2-4 und q=1-10, 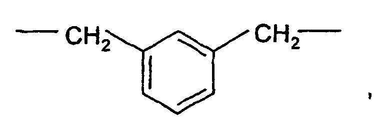 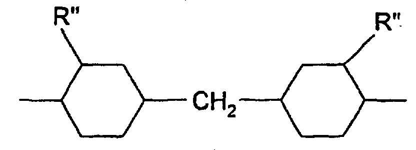 mit R"=CH₃ oder H, oder 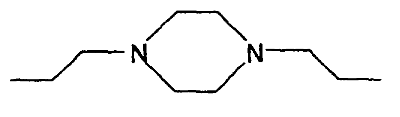 entspricht, oder Mischungen davon, in einem aprotischen Lösemittel in Gegenwart eines Lithiumsalzes zu Harnstoffaddukten der allgemeinen Struktur (II) umgesetzt werden, 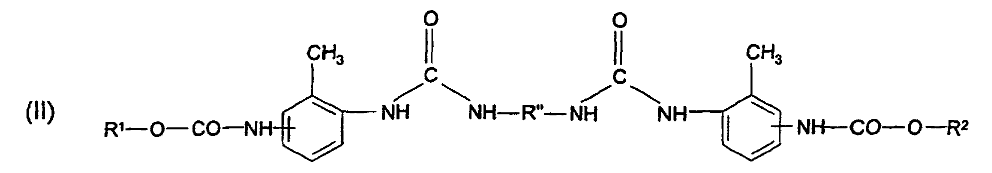 in der die Reste R¹ und R² den Bedingungen des Restes R genügen.

Bei dem erfindungsgemäßen Verfahren kann anstelle der vorgenannten Diamine oder zusätzlich zu diesen para-Xylylendiamin der Formel 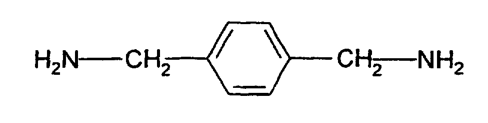 eingesetzt werden.

Die als Thixotropie-Mittel wirksame, Hamstoffurethane enthaltende Lösung kann durch das erfindungsgemäße Verfahren grundsätzlich auf zwei verschiedenen Wegen erhalten werden:
a) zum einen können zunächst mindestens zwei strukturell verschiedene Alkohole R-OH vermischt und anschließend mit einem 1,5 bis 5-fachen Überschuß von Toluylendiisocyanat umgesetzt werden. Der nicht umgesetzte Teil des Toluylendiisocyanats wird danach unter schonenden Bedingungen, dem Stand der Technik gemäß, aus dem Reaktionsgemisch entfernt, und die auf diese Weise erhaltene Mischung aus den strukturell verschiedenen Monoisocyanat-Addukten wird anschließend mit den Diaminen in einem aprotischen Lösemittel in Gegenwart eines Lithiumsalzes zu Harnstoffurethanen der allgemeinen Struktur (II) umgesetzt.
b) zum anderen können zunächst mindestens zwei strukturell verschiedene Alkohole R-OH getrennt voneinander mit einem 1,5 bis 5-fachen Überschuß von Toluylendiisocyanat umgesetzt werden. Der nicht umgesetzte Teil des Toluylendiisocyanats wird unter schonenden Bedingungen, dem Stand der Technik gemäß, aus dem jeweiligen Reaktionsgemisch entfernt, und die auf diese Weise erhaltenen, strukturell verschiedenen Monoisocyanat-Addukte werden miteinander vermischt. Die so erhaltene Mischung aus strukturell verschiedenen Monoisocyanat-Addukten wird anschließend mit den Diaminen in einem aprotischen Lösemittel in Gegenwart eines Lithiumsalzes zu Harnstoffurethanen der allgemeinen Struktur (II) umgesetzt.

Der molare Anteil der jeweiligen Monoisocyanat-Addukte in der Mischung aus strukturell verschiedenen Monoisocyanat-Addukten liegt zwischen 20 und 80 %, bevorzugt zwischen 35 und 65 %, besonders bevorzugt zwischen 45 und 55 %, wobei die Summe der molaren Anteile der Monoisocyanat-Addukte 100 % beträgt.

Der molare Überschuß des Toluylendiisocyanats beträgt bevorzugt 1,5 bis 5,0 Mol, besonders bevorzugt 2,0 bis 4,0 Mol.

Der Feststoffgehalt der so erzeugten Harnstoffurethan-Lösungen beträgt 5 bis 80 %, bevorzugt 20 bis 60 %, besonders bevorzugt 25 bis 50 %. Die Umsetzung der Monoisocyanat-Adduktmischungen mit dem Diamin erfolgt in polaren aprotischen Lösungsmitteln, wie z. B. Dimethylsulfoxid, N,N-Dimethylformamid, N,N-Dimethylacetamid, N-Methylpyrrolidon, N-Butylpyrrolidon oder vergleichbaren Alkylpyrrolidonen oder deren Mischungen

Der Anteil an Lithiumverbindungen beträgt 0,2 bis 2 Mol, vorzugsweise 0,5 bis 1,5 Mol, besonders bevorzugt 0,75 bis 1,25 Mol Lithium bezogen auf das Aminäquivalent des eingesetzten Diamins.

Besonders vorteilhaft ist der Einsatz von LiNO₃ im Gegensatz zu LiCI, da Chloridionen sich nachteilig in Beschichtungssystemen auswirken und die Korrosion der metallischen Untergründe fördern können, auf welche die thixotropen Beschichtungssysteme aufgetragen werden.

Bei den zur Herstellung der Monoisocyanat-Addukte eingesetzten Alkoholen R-OH handelt es sich bevorzugt um lineare oder verzweigte primäre Alkohole, die gesättigt oder ungesättigt sein können wie z.B. n-Butanol, 2-Ethylhexanol, Isotridecylalkohol, Guerbet-Alkohole der Kettenlänge C₁₀ bis C₂₀, Oleylalkohol, Linoleylatkohol, Laurylalkohol, Stearylalkohol, aber auch cycloaliphatische Alkohole wie z.B. Cyclohexanol oder dessen alkylsubstituierte Derivate sowie aromatisch substituierte Alkanole wie Benzylalkohol sind geeignet.

Zur Einstellung der Polarität sind besonders die alkoxilierten Derivate der oben aufgeführten Alkohole geeignet, wobei in diesem Falle auch niedere Alkohole wie z.B. Methanol oder Allylalkohol als Startkomponente für die Alkoxilierung verwendet werden können. Die so hergestellten Produkte enthalten unter anderem bevorzugt Ethylenoxid- und/oder Propylenoxideinheiten in der Kette und können diese Einheiten alternierend oder in Sequenzen aufweisen. Bei der Alkoxilierung können auch aromatische Alkohole wie z.B. Phenole oder Alkylphenole als Startkomponente eingesetzt werden.

Um die Verträglichkeit der erfindungsgemäßen Hamstoffurethane an moderne Bindemittel anzupassen, ist es auch möglich, Ester- oder Polyestergruppen in die

Alkoholkomponente einzubringen, z.B. durch Addition von Lactonen, wie z.B. s-Caprolacton, an die oben aufgeführten Alkohole oder Alkoholalkoxilate, oder durch die Verwendung hydroxyfunktioneller (Meth)acrylate.

Bei den Diisocyanaten, welche zur Bildung der Monoisocyanat-Addukte eingesetzt werden, handelt es sich im wesentlichen um Toluylendiisocyanate in der bekannten und üblichen Isomerenverteilung, wobei sich bei der Destillation der Überschussanteile an Diisocyanat Verschiebungen im Isomerenanteil ergeben, so daß auch höhere Anteile an 2.6-Toluylendiisocyanat entstehen können als üblicherweise im Handel angeboten wird. Diese Destillate können wieder eingesetzt werden bei der Herstellung weiterer Monoaddukte. Bevorzugt sind Toluylendiisocyanat-Isomere mit 50 bis 100 % 2,4-Isomerenanteil.

Bei den Diaminen der Formel H₂N-R'-NH₂ handelt es sich im wesentlichen um lineare Diamine mit der Kettenlänge C₂ bis C₁₂, die geradkettig oder verzweigt sein können, wie z.B. 1,3-Propandiamin, Hexamethylendiamin, Octamethylendiamin, Diaminododecan oder Neopentandiamin. Cyclische Diamine wie z.B. 4,4'diaminodicyclohexylmethan oder 3,3'-Dimethyl-4,4'-diaminodicyclohexylmethan sind ebenfalls geeignet. Besonders bevorzugt sind aromatisch-aliphatische Diamine wie z.B. meta-Xylylendiamin oder para-Xylylendiamin. Die Diamine können auch als Mischung zur Harnstoffbildung eingesetzt werden, da hierdurch die Kristallisationsneigung des Harnstoffurethans in Lösung reduziert wird.

Die durch das erfindungsgemäße Verfahren hergestellten Hamstoffurethane enthalten weder freie Isocyanat- noch freie Aminogruppen. Sie sind dementsprechend physiologisch unbedenklich. Des weiteren treten keine negativen Nebenreaktionen mit Bindemitteln oder Füllstoffen auf. Die Lagerstabilität dieser so hergestellten Harnstoffurethan-Lösungen ist außerordentlich hoch und beträgt bei normaler Lagertemperatur durchaus 6 Monate oder mehr. Die Hamstoffurethan-Lösungen weisen zudem eine breite Verträglichkeit in Bindemitteln auf und ermöglichen damit eine sichere Anwendung der Thixotropie-Mittel.

Die vorliegende Erfindung betrifft des Weiteren die Verwendung der durch das erfindungsgemäße Verfahren hergestellten Harnstoffurethan-Lösung zur Thixotropierung von Beschichtungsmitteln. Bei den Beschichtungsmitteln handelt es sich bevorzugt um wässrige, lösungsmittelhaltige und lösungsmittelfreie Lacke, PVC Plastisole, Beschichtungen auf Epoxidbasis und auf Basis ungesättigter Polyesterharze.

Die wesentlichen Merkmale des erfindungsgemäßen Verfahrens werden anhand der folgenden Ausführungsbeispiele verdeutlicht.

### BEISPIELE

### Vergleichsbeispiel nach EP-B-0 006 252 (nicht erfindungsgemäß)

1 mol (174 g) Toluylendiisocyanat (65% 2,4-Isomer, im folgenden T65 genannt) wird im Reaktionsgefäß vorgelegt und 1 mol Methoxypolyethylenglykol (mittleres MG: 350 g/mol) unter Rühren langsam zugetropft und nach bekanntem Verfahren zu Ende geführt. Dabei wird die Temperatur unterhalb 40°C gehalten. Das so hergestellte Isocyanat-Addukt hat noch einen freien TDI-Gehalt von 6,3 %, der gesamt-NCO-Gehalt beträgt 8,05 %. Diese Reaktionsmischung wird zu einer Lösung aus 0,5 mol Xylylendiamin (68 g) und 0,75 mol LiCI, bezogen auf Aminäquivalent, in N-Methylpyrrolidon (NMP) zudosiert. Der FK beträgt 50%. Die Reaktion verläuft exotherm. Das anfänglich klare Produkt neigt nach einer Lagerung von 2 Monaten zur Gelbildung.

### Herstellung der Monoaddukte (erfindungsgemäß) Beispiele 1-7:

### Beispiel 1:

0,5 Mol (37 g) n- Butanol werden bei 30°C zu 1,25 Mol (217,5 g) Toluylendiisocyanat (80% 2,4-Isomer, im folgenden T80 genannt) in 2 Std. zudosiert. Die Temperatur wird dabei unterhalb 45°C gehalten. Nach beendeter Zugabe wird weiter 2 Std. gerührt, bis der theoretische NCO-Gehalt von 33,0 % erreicht ist. Der Überschuß des Isocyanates wird im Vakuum (0,1 mbar) bei 150 bis 170° C abdestilliert. Der NCO-Gehalt beträgt 16,9 %, der freie TDI-Gehalt < 0,5 %.

### Beispiel 2:

0,25 Mol Butyltriglykol (53 g) werden bei RT zu 0,625 (108,75 g) Mol Toluylendiisocyanat (T65) in 2 Std. zudosiert. Dabei wird die Temperatur unterhalb 45°C gehalten. Nach beendeter Zugabe wird weiter 2,5 Std. gerührt, bis der theoretische NCO-Gehalt von 25,8 % erreicht ist. Der Überschuß des Isocyanates wird im Vakuum (0,1 mbar) bei 150 bis 170° C abdestilliert. Der NCO-Gehalt beträgt 10,9 %, der freie TDI-Gehalt < 0,5 %.

### Beispiel 3:

0,25 Mol i-Tridecanol (50 g) werden bei 40°C zu 0,75 Mol (130,5 g) Toluylendiisocyanat (T65) in 2 Std. zudosiert. Die Temperatur wird dabei unterhalb 60°C gehalten. Nach beendeter Zugabe wird weiter 2 Std. gerührt, bis der theoretische NCO-Gehalt von 29,1 % erreicht ist. Der Überschuß des Isocyanates wird im Vakuum (0,1 mbar) bei 150 - 170° C abdestilliert. Der NCO-Gehalt beträgt 11,3 %, der freie TDI-Gehalt < 0,5 %.

### Beispiel 4:

0,25 Mol Butanol (18 g) werden mit 0,5 mol Caprolacton (57 g) und 0,1 % (0,075 g) DBTL bei 160°C 6 Std. zur Reaktion gebracht und anschließend auf 50°C abgekühlt. Der so hergestellte Hydroxyester (BuCP2) (Hydroxylzahl 186) wird bei 40°C in 2 Std. zu 0,75 Mol Toluylendiisocyanat (130,5 g) zudosiert. Die Temperatur wird dabei unterhalb 60°C gehalten. Nach beendeter Zugabe wird weiter 2 Std. gerührt, bis der theoretische NCO-Gehalt von 26,2 % erreicht ist. Der Überschuß des Isocyanates wird im Vakuum (0,1 mbar) bei 150 bis 170° C abdestilliert. Der NCO-Gehalt beträgt 9,2 %, der freie TDI-Gehalt < 0,5 %.

### Beispiel 5:

0,2 Mol Methoxypolyethylenglykol 350 (70 g) werden bei 50°C zu 0,6 Mol (104,4 g) Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO-Gehalt von 24,1 % erreicht ist. Der Überschuß des Isocyanates wird im Vakuum (0,1 mbar) bei 150 bis 170° C abdestilliert. Der NCO-Gehalt beträgt 8,0 %, der freie TDI-Gehalt < 0,5 %.

### Beispiel 6:

0,2 Mol Methoxypolyethylenglykol 500 (100 g) werden bei 50°C zu 0,6 Mol (104,4 g) Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO-Gehalt von 20,5 % erreicht ist. Der Überschuß des Isocyanates wird im Vakuum (0,1 mbar) bei 150 bis 170° C abdestilliert. Der NCO-Gehalt beträgt 6,2 %, der freie TDI-Gehalt < 0,5 %.

### Beispiel 7:

Eine Mischung aus 0,2 Mol Methoxypolyethylenglykol 500 (100 g) und 0,2 Mol Methoxypolyethylenglykol 350 (70 g) werden bei 50°C zu 0,8 Mol (139,2 g) Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO-Gehalt von 16,3 % erreicht ist. Der Überschuß des Isocyanates wird im Vakuum (0,1 mbar) bei 150 bis 170° C abdestilliert. Der NCO-Gehalt beträgt 7,0 %, der freie TDI-Gehalt < 0,5%.

**Tabelle 1:**

| **Monoaddukte** | | | | |
|---|---|---|---|---|
| **Beispiel** | **Alkohol** | **NCO- Gehalt** | **Equ.-Gew** | **Mol-Verhältnis TDI : Alkohol** |
| | | | | |
| 1 | Butanol | 16,9 % | 248 | 2,5 : 1 |
| 2 | Butyltriglykol | 10,9 % | 392 | 2,5 : 1 |
| 3 | i-Tridecanol | 11,3 % | 372 | 3 : 1 |
| 4 | BuCP2 | 9,2 % | 457 | 3 : 1 |
| 5 | MPEG 350 | 8,0 % | 525 | 3 : 1 |
| 6 | MPEG 500 | 6,2 % | 675 | 3 : 1 |
| 7 | MPEG 350 / MPEG 500 1:1 | 7,0 % | 600 | 2 : 1 |

**Tabelle 2:**

| **Mischungen der Monoaddukte aus Tabelle 1** | | |
|---|---|---|
| **Mischung** | **Monoadduktmischung** | **Mol-Verhältnis** |
| | | |
| A | Butyltriglykol / i-Tridecyl (aus Bsp. 2 + 3) | 1 : 1 |
| B | Butyltriglykol / MPEG 500 (aus Bsp. 2 + 5) | 1 : 1,75 |
| C | Butyltriglykol / MPEG 350 / MPEG 500 (aus Bsp. 2 + 5 + 6) | 1 : 1 : 1 |
| D | Butyltriglykol / BuCP2 (aus Bsp. 2 + 4) | 2 : 1 |
| E | Butyltriglykol / MPEG 500 (aus Bsp. 2 + 6) | 1 : 2 |
| F | MPEG 350 / MPEG 500 (aus Bsp. 7) | 1 : 1 |

### Herstellung der Harnstoffurethane (erfindungsgemäß) Beispiele 8-14:

### Beispiel 8:

In 403 g N-Methylpyrrolidon werden bei 80°C 15,9 g LiCl und 68 g (0,5 mol) Xylylendiamin gelöst. Dann wird innerhalb 1 Std. 320 g der Mischung A zudosiert. Nach erfolgter Zugabe wird noch 30 Min. gerührt und dann auf RT abgekühlt. Die so erhaltene Hamstoffurethan-Lösung hat einen Feststoffgehalt von 50 %. Man erhält ein klares Produkt, das ohne Gelbildung längere Zeit stabil bleibt.

### Beispiel 9:

In 656 g N-Methylpyrrolidon werden bei 80°C 15,9 g LiCl und 68 g (0,5 mol) Xylylendiamin gelöst. Dann werden innerhalb 1 Std. 572 g der Mischung B zudosiert. Nach erfolgter Zugabe wird noch 30 Min. gerührt und dann auf RT abgekühlt. Die so erhaltene Hamstoffurethan-Lösung hat einen Feststoffgehalt von 50 %. Man erhält ein klares, über längere Zeit stabiles Produkt.

### Beispiel 10:

In 690 g N-Methylpyrrolidon werden bei 80°C 25,8 g LiNO₃ und 68 g (0,5 mol) Xylylendiamin gelöst. Dann werden innerhalb 1 Std. 472 g der Mischung C zudosiert. Nach erfolgter Zugabe wird noch 30 Min. gerührt und dann auf RT abgekühlt. Die so erhaltene Hamstoffurethan-Lösung hat einen Feststoffgehalt von 45 %. Das Produkt ist über einen längeren Zeitraum klar.

### Beispiel 11:

In 760 g Dimethylacetamid werden bei 80°C 25,8 g LiNO₃ und 68 g (0,5 mol) Xylylendiamin gelöst. Dann werden innerhalb 1 Std. 413 g der Mischung D zudosiert. Nach erfolgter Zugabe wird noch 30 Min. gerührt und dann auf RT abgekühlt. Die so erhaltene Hamstoffurethan-Lösung hat einen Feststoffgehalt von 40 %. Man erhält ein klares, über längere Zeit stabiles Produkt.

### Beispiel 12:

In 830 g N-Methylpyrrolidon werden bei 80°C 15,9 g LiCl und 84 g (0,5 mol) Hexamethylendiamin gelöst. Dann werden innerhalb 1 Std. 580 g der Mischung E zudosiert. Nach erfolgter Zugabe wird noch 30 Min. gerührt und dann auf RT abgekühlt. Die so erhaltene Hamstoffurethan-Lösung hat einen Feststoffgehalt von 45 %. Man erhält ein klares, über längere Zeit stabiles Produkt.

### Beispiel 13:

In 630 g N-Methylpyrrolidon werden bei 80°C 15,9 g LiCI und 84 g (0,5 mol) Hexamethylendiamin gelöst. Dann wird innerhalb 1 Std. 320 g der Mischung A zudosiert. Nach erfolgter Zugabe wird noch 30 Min. gerührt und dann auf RT abgekühlt. Die so erhaltene Harnstoffurethan-Lösung hat einen Feststoffgehalt von 40 %. Man erhält ein klares Produkt, das ohne Gelbildung längere Zeit stabil bleibt.

### Beispiel 14:

In 497 g N-Methylpyrrolidon werden bei 80°C 15,9 g LiCl und 68 g (0,5 mol) Xylylendiamin gelöst. Dann wird innerhalb 1 Std. 413 g der Mischung F zudosiert. Nach erfolgter Zugabe wird noch 30 Min. gerührt und dann auf RT abgekühlt. Die so erhaltene Harnstoffurethan-Lösung hat einen Feststoffgehalt von 50 %. Man erhält ein klares Produkt, das ohne Gelbildung längere Zeit stabil bleibt.

### Beispiel 15:

In 460 g N-Methylpyrrolidon werden bei 80 °C 11,1 g LiCI und 47,6 g (0,5 mol) para-Xylylendiamin gelöst. Dann werden innerhalb 1 Std. 400,4 g der Mischung B zudosiert. Nach erfolgter Zugabe wird noch 30 Min. gerührt und dann auf RT abgekühlt. Die so erhaltene Harnstoffurethanlösung hat einen Feststoffgehalt von 50 %. Man erhält ein klares, über längere Zeit stabiles Produkt.

### Beispiel 16

In 414 g N-Methylpyrrolidon werden bei 80 °C 15, 5 g LiNO₃ und 68 g (0,5 mol) para-Xylylendiamin gelöst. Dann werden innerhalb 1 Std. 283,2 g der Mischung C zudosiert. Nach erfolgter Zugabe wird noch 30 Min. gerührt und dann auf RT abgekühlt. Die so erhaltene Harnstoffurethanlösung hat einen Feststoffgehalt von 45 %. Das Produkt ist über einen längeren Zeitraum klar.

### Anwendungstechnische Beispiele:

Die durch das erfindungsgemäße Verfahren hergestellten Hamstoffurethan-Lösungen wurden in Wasser bzw. in Wasser/Lösemittelmischungen auf ihre Verträglichkeit und auf ihre rheologische Wirksamkeit untersucht.

Zur Überprüfung der Verträglichkeit und der rheologischen Wirksamkeit in Wasser bzw. in Wasser/Lösemittelmischungen werden die Harnstoffurethane unter Rühren 2 Minuten bei einer Schergeschwindigkeit von 1 m/sec in Wasser bzw. in die Wasser/Lösemittelmischungen eingearbeitet. Die Beurteilung erfolgt nach 4 Stunden.

Bewertung der rheologischen Wirksamkeit: 1=starkes Gel, 6=kein Gel Bewertung der Verträglichkeit: 1 =klare Lösung, 6=Ausfällung der Harnstoffurethane

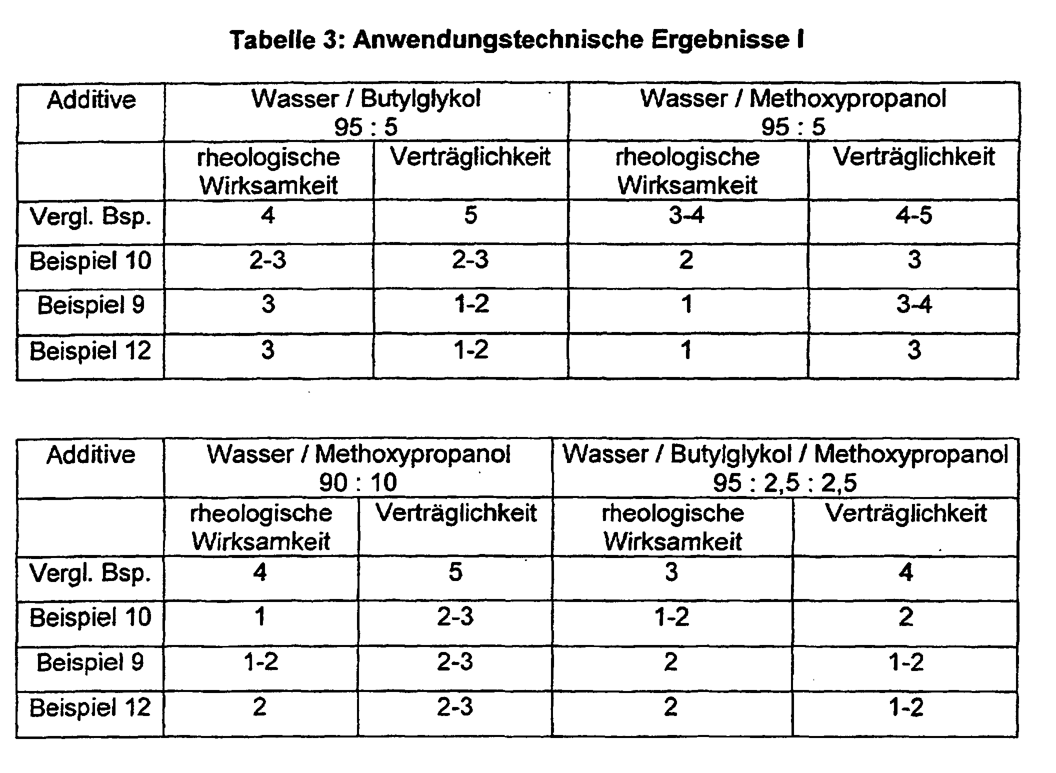

Zur Überprüfung der Antiabsetzwirkung der erfindungsgemäßen Hamstoffurethane wurden Pigmentslurries hergestellt und das Absetzverhalten nach Lagerung von 3 Wochen überprüft.

Zur Herstellung der Pigmentslurries wird zunächst eine Mischung aus Wasser, Butylglykol und Disperbyk 192 hergestellt. Diese Mischung wird dann unter Rühren dem Pigment, Iriodin 9303 Royal Gold WR II der Firma Merck, zugegeben. Anschließend werden ebenfalls unter Rühren mit dem Dispermaten, 2 Minuten bei einer Schergeschwindikeit von 2m/s, die erfindungsgemäßen Harnstoffurethane eingearbeitet. Zur Beurteilung des Absetzverhaltens werden diese Slurries in ein Glasgefäß (10cm hoch, 1,5 cm ⌀) auf 7,5 cm Füllhöhe eingefüllt. Nach 3 Wochen Lagerung bei RT wird die Synerese bestimmt.

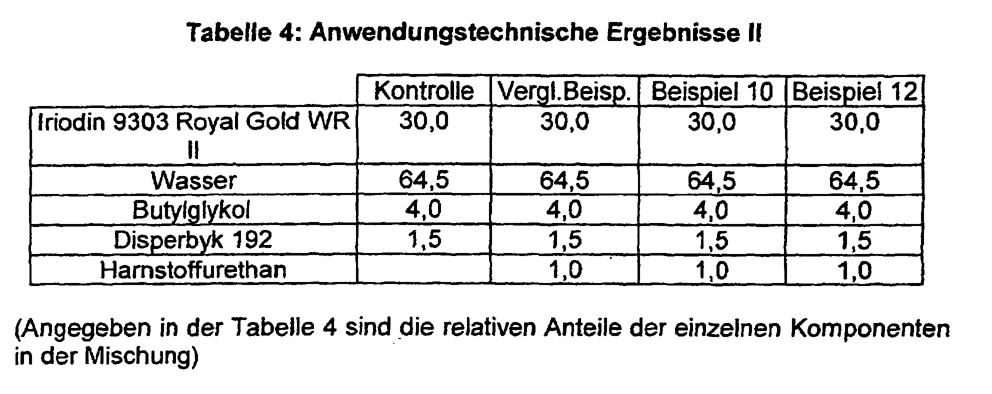

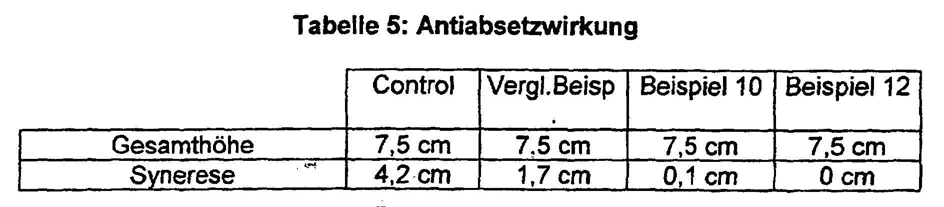

## Patentansprüche

1. Verfahren zur Herstellung einer als Thixotropie-Mittel wirksamen, Harnstoffurethane enthaltenden Lösung, bei dem Monohydroxyverbindungen der allgemeinen Struktur R-OH, in der R für einen n-Alkyl-Rest oder einen i-Alkyl-Rest mit 4 bis 22 C-Atomen, einen Alkenylrest mit 3 bis 18 C-Atomen, einen Cycloalkylrest oder einen Aralkylrest, ein Rest der Formel CₘH₂ₘ₊₁(O-CₙH₂ₙ)ₓ-, CₘH₂ₘ₊₁(OOC-CᵥH₂ᵥ)ₓ- oder Z-C₆H₄(O-CₙH₂ₙ)ₓ- mit m=1-22, n=2-4, x=1-15 und v=4 oder 5 und Z für einen Alkylrest mit 1 bis 12 C-Atomen steht, mit einem 1,5 bis 5-fachen Überschuß von Toluylendiisocyanat umgesetzt wird, der nicht umgesetzte Teil des Toluylendiisocyanats aus dem Reaktionsgemisch entfernt wird und die auf diese Weise erhaltenen Monoisocyanat-Addukte mit Diaminen der Formel H₂N-R'-NH₂, in der R'
-CₒH₂ₒ- mit o=2-12, -(CₚH₂ₚ-O-CₚH₂ₚ)_{q}- mit p=2-4 und q=1-10, 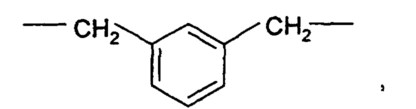 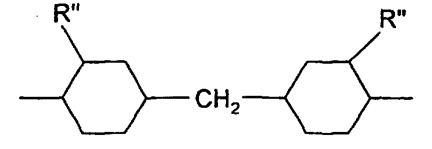 mit R"=CH₃ oder H, oder 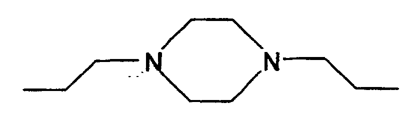 entspricht, oder Mischungen davon, in einem aprotischen Lösemittel in Gegenwart eines Lithiumsalzes zu Harnstoffurethanen umgesetzt werden, **dadurch gekennzeichnet, daß** zur Herstellung der Hamstoffurethane mindestens zwei strukturell verschiedene Monoisocyanat-Addukte, die sich durch ihre Alkoholkomponente unterscheiden, mit den Diaminen umgesetzt werden.

2. Verfahren nach Anspruch 1, **dadurch gekennzeichnet, daß** als Diamin der Formel H₂N-R'-NH₂ para-Xylylendiamin der Formel 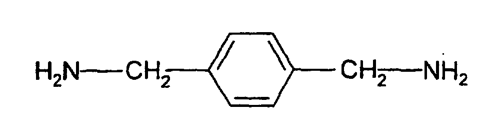 zusätzlich zu den im Anspruch 1 genannten Diaminen oder anstelle derselben eingesetzt wird.

3. Verfahren nach Anspruch 1 oder 2, **dadurch gekennzeichnet, daß** zunächst mindestens zwei strukturell verschiedene Alkohole R-OH vermischt und anschließend mit einem 1,5 bis 5-fachen Überschuß von Toluylendiisocyanat umgesetzt werden, der nicht umgesetzte Teil des Toluylendiisocyanats aus dem Reaktionsgemisch entfernt wird, und die auf diese Weise erhaltene Mischung aus strukturell verschiedenen Monoisocyanat-Addukten mit den Diaminen in einem aprotischen Lösemittel in Gegenwart eines Lithiumsalzes zu Harnstoffurethanen umgesetzt wird.

4. Verfahren nach Anspruch 1 oder 2, **dadurch gekennzeichnet, daß** zunächst mindestens zwei strukturell verschiedene Alkohole R-OH getrennt voneinander mit einem 1,5 bis 5-fachen Überschuß von Toluylendiisocyanat umgesetzt werden, und der nicht umgesetzte Teil des Toluylendiisocyanats aus den Reaktionsgemischen entfernt wird, und die auf diese Weise erhaltenen strukturell verschiedenen Monoisocyanat-Addukte miteinander vermischt und die erhaltene Mischung aus strukturell verschiedenen Monoisocyanat-Addukten mit den Diaminen in einem aprotischen Lösemittel in Gegenwart eines Lithiumsalzes zu Harnstoffurethanen umgesetzt wird.

5. Verfahren nach Anspruch 3 oder 4, **dadurch gekennzeichnet, daß** der molare Anteil Monoisocyanat-Addukte in der Mischung aus strukturell verschiedenen Monoisocyanat-Addukten zwischen 20 und 80 % liegt, wobei die Summe der molaren Anteile der Monoisocyanat-Addukte 100 % beträgt.

6. Verfahren nach Anspruch 1 bis 5, **dadurch gekennzeichnet, daß** eine Lösung mit einem Feststoffgehalt von 5 bis 80 Gew.-% hergestellt wird.

7. Verfahren nach Anspruch 1 bis 6, **dadurch gekennzeichnet, daß** der molare Überschuß an Toluylendiisocyanat 2 bis 4 beträgt.

8. Verfahren nach Anspruch 1 bis 7, **dadurch gekennzeichnet, daß** ein Toluylendiisocyanat-Isomerengemisch mit einem Anteil von 50-100 Gew.-% 2,4-Isomer verwendet wird.

9. Verfahren nach Anspruch 1 bis 6, **dadurch gekennzeichnet, daß** 0,2 bis 2 Mol Lithiumverbindung bezogen auf das Äquivalentgewicht des Diamins eingesetzt werden.

10. Verfahren nach Anspruch 1 bis 7, **dadurch gekennzeichnet, daß** als Lithiumsalz LiNO₃ eingesetzt wird.

11. Verwendung der nach dem Verfahren nach Anspruch 1 bis 8 hergestellten Lösung zur Thixotropierung von Beschichtungsmitteln.

## Claims

1. Process for the production of a urea urethanes-containing solution effective as a thixotroping agent, in which monohydroxy compounds of the general structure R-OH, in which R stands for an n-alkyl group or an i-alkyl group with 4 to 22 C atoms, an alkylene group with 3 to 18 C atoms, a cycloalkyl group or an aralkyl group, a group of the formula CₘH₂ₘ₊₁(O-CₙH₂ₙ)ₓ-, CₘH₂ₘ₊₁ (OOC-CᵥH₂ᵥ) ₓ- or Z-C₆H₄ (O-CₙH₂ₙ)ₓ- where m=1-22, n=2-4, x=1-15 and v=4 or 5 and Z stands for an alkyl group with 1 to 12 C atoms, is reacted with a 1.5 to 5-fold excess of toluylene diisocyanate, the unreacted part of the toluylene diisocyanate being removed from the reaction mixture and the monoisocyanate adducts obtained in this way being reacted to urea urethanes with diamines of the formula H₂N-R'-NH₂ in which R' corresponds to
-CₒH₂ₒ- where o=2-12, -(CₚH₂ₚ-O-CₚH₂ₚ)_{q}- where p=2-4 and q=1-10, 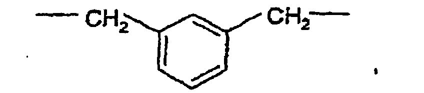 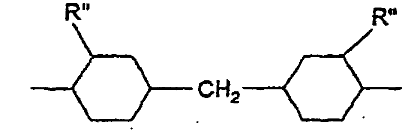 where R''=CH₃ or H, or 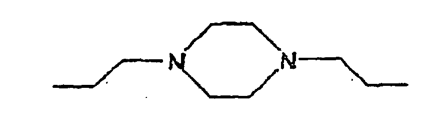 or mixtures thereof, in an aprotic solvent in the presence of a lithium salt, **characterised in that** to produce the urea urethanes at least two structurally different monoisocyanate adducts, which differ in their alcohol component, are reacted with the diamines.

2. Process according to claim 1, **characterised in that** para-xylylene diamine of the formula 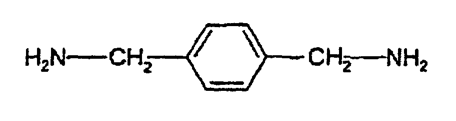 is used as the diamine of the formula H₂N-R'-NH₂, in addition to the diamines stated in claim 1, or instead of these.

3. Process according to claim 1 or 2, **characterised in that** at least two structurally different alcohols R-OH are first mixed and then reacted with a 1.5 to 5-fold excess of toluylene diisocyanate, the unreacted part of the toluylene diisocyanate is removed from the reaction mixture and the mixture of structurally different monoisocyanate adducts obtained in this way is reacted with the diamines in an aprotic solvent in the presence of a lithium salt to form urea urethanes.

4. Process according to claim 1 or 2, **characterised in that** two structurally different alcohols R-OH are first reacted separately from each other with a 1.5 to 5-fold excess of toluylene diisocyanate, and the unreacted part of the toluylene diisocyanate is removed from the reaction mixtures, and the structurally different monoisocyanate adducts obtained in this way are mixed with each other and the mixture of structurally different monoisocyanate adducts obtained is reacted with the diamines in an aprotic solvent in the presence of a lithium salt to form urea urethanes.

5. Process according to claim 3 or 4, **characterised in that** the molar portion of monoisocyanate adducts in the mixture of structurally different monoisocyanate adducts is 20 to 80%, the sum of the molar portions of the monoisocyanate adducts being 100%.

6. Process according to claim 1 to 5, **characterised in that** a solution with a solid content of 5 to 80 wt.% is produced.

7. Process according to claim 1 to 6, **characterised in that** the molar excess of toluylene diisocyanate is 2 to 4.

8. Process according to claim 1 to 7, **characterised in that** a toluylene diisocyanate isomer mixture with a proportion of 50-100 wt.% 2,4-isomer is used.

9. Process according to claim 1 to 6, **characterised in that** 0.2 to 2 mol of lithium compound in relation to the equivalent weight of the diamine is used.

10. Process according to claim 1 to 7, **characterised in that** LiNO₃ is used as the lithium salt.

11. Use of the solution produced by the process according to claims 1 to 8 for thixotroping coating agents.

## Revendications

1. Procédé pour la préparation d'une solution active en tant qu'agent thixotropique, contenant des urée-uréthanes, dans lequel on transforme des composés monohydroxy de structure générale R-OH, dans laquelle R représente un reste n-alkyle ou i-alkyle comprenant 4 à 22 atomes de carbone, un reste alcényle comprenant 3 à 18 atomes de carbone, un reste cycloalkyle ou un reste aralkyle, un reste de formule CₘH₂ₘ₊₁ (O-CₙH₂ₙ)ₓ-, CₘH₂ₘ₊₁(OOC-CᵥH₂ᵥ) ₓ- ou Z-C₆H₄(O-CₙH₂ₙ) ₓ- avec m = 1 à 22, n = 2 à 4, x = 1 à 15 et v = 4 ou 5 et Z représente un reste alkyle comprenant 1 à 12 atomes de carbone, avec un excès de 1,5 à 5 fois de toluylène diisocyanate, on élimine la partie non transformée du toluylène diisocyanate du mélange réactionnel et on transforme les produits d'addition de monoisocyanate ainsi obtenus avec des diamines de formule H₂N-R'-NH₂, dans laquelle R' correspond à
-CₒH₂ₒ avec o = 2 à 12, -(CₚH₂ₚ-O-CₚH₂ₚ)_{q}- avec p = 2 à 4 et q = 1 à 10, 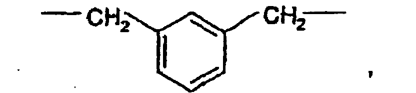 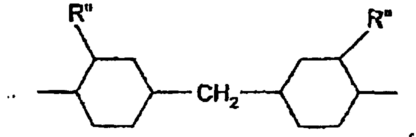 avec R" = CH₃ ou H, 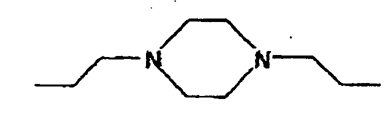 ou des mélanges de ceux-ci, dans un solvant aprotique en présence d'un sel de lithium en urée-uréthanes, **caractérisé en ce qu'**on transforme, pour la préparation des urée-uréthanes, au moins deux produits d'addition de monoisocyanate de structures différentes, qui se distinguent par leurs composants alcools, avec les diamines.

2. Procédé selon la revendication 1, **caractérisé en ce qu'**on utilise comme diamine de formule H₂N-R'-NH₂ la para-xylylènediamine de formule 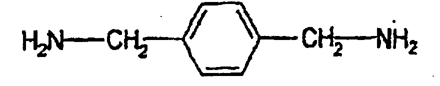 en plus des diamines mentionnées dans la revendication 1 ou à la place de celles-ci.

3. Procédé selon la revendication 1 ou 2, **caractérisé en ce qu'**on mélange d'abord au moins deux alcools de structures différentes R-OH, puis les transforme avec un excès de 1,5 à 5 fois de toluylène diisocyanate, élimine la partie non transformée du toluylène diisocyanate du mélange réactionnel et transforme le mélange ainsi obtenu de produits d'addition de monoisocyanate de structures différentes avec les diamines dans un solvant aprotique en présence d'un sel de lithium en urée-uréthanes.

4. Procédé selon la revendication 1 ou 2, **caractérisé en ce qu'**on transforme d'abord au moins deux alcools R-OH de structures différentes, séparément l'un de l'autre, avec un excès de 1,5 à 5 fois de toluylène diisocyanate, élimine la partie non transformée du toluylène diisocyanate du mélange réactionnel, mélange les produits d'addition de monoisocyanate de structures différentes ainsi obtenus l'un avec l'autre et transforme le mélange obtenu de produits d'addition de monoisocyanate de structures différentes avec les diamines dans un solvant aprotique en présence d'un sel de lithium en urée-uréthanes.

5. Procédé selon la revendication 3 ou 4, **caractérisé en ce que** la proportion molaire de produits d'addition de monoisocyanate dans le mélange des produits d'addition de monoisocyanate de structures différentes est située entre 20 et 80%, la somme des proportions molaires des produits d'addition de monoisocyanate étant de 100%.

6. Procédé selon la revendication 1 à 5, **caractérisé en ce qu'**on prépare une solution présentant une teneur en extrait sec de 5 à 80% en poids.

7. Procédé selon la revendication 1 à 6, **caractérisé en ce que** l'excès molaire de toluylène diisocyanate est de 2 à 4.

8. Procédé selon la revendication 1 à 7, **caractérisé en ce qu'**on utilise un mélange d'isomères de toluylène diisocyanate présentant une proportion de 50 à 100% en poids d'isomère 2,4.

9. Procédé selon la revendication 1 à 6, **caractérisé en ce qu'**on utilise 0,2 à 2 moles de composé du lithium par rapport au poids équivalent de la diamine.

10. Procédé selon la revendication 1 à 7, **caractérisé en ce qu'**on utilise comme sel de lithium le LiNO₃.

11. Utilisation de la solution préparée selon le procédé selon la revendication 1 à 8 pour rendre thixotropiques des agents de revêtement.
